# EUROPEAN PATENT APPLICATION

(11) **EP 3 530 617 A1**
(43) Date of publication of application: **28.08.2019**
(21) Application number: 18382117.2
(22) Date of filing: 27.02.2018
(51) Int. Cl.: C01B 32/192, C01B 32/198

(54) **METHOD OF FORMING A POROUS GRAPHENE-BASED MACROSCOPIC STRUCTURE**

(71) Applicant: Fundacio Privada Institut Catala de Nanociencia I Nanotecnologia (ICN2), 08193 Bellaterra (Barcelona) (ES); Institució Catalana de Recerca i Estudis Avançats, 08010 Barcelona (ES)
(72) Inventor: Merkoçi Hyka, Arben, 08290 CERDANYOLA DEL VALLÈS (ES); Baptista Pires, Luis Miguel, 08024 BARCELONA (ES); de la Escosura Muñiz, Alfredo, 08224 TERRASSA (ES)
(74) Representative: ZBM Patents - Zea, Barlocci & Markvardsen

(57) **Abstract**

A method of forming a porous graphene-based macroscopic structure includes the intermediate formation of a suspension of clustered Graphene Oxide (GO) in water, which comprises the steps of: preparing a mixture of an aqueous solution of oxidized Graphene Oxide in water and a reducing agent; autoclaving said mixture at 75-200°C for 5-500 minutes; precipitating the resulting solid material in an agglomerated form and transferring it to an aqueous solution; and exposing the agglomerated material in the aqueous solution to sonication at a frequency of 10-50 kHz for 10-30 minutes. The method further comprises the steps of: filtering the aqueous suspension of clustered GO through a pervious membrane in order to have some clustered GO deposited on a first side of the membrane; and pressing a substrate against the first side of the membrane in order to transfer the clustered GO deposited thereon to the substrate.

## Description

The present disclosure relates to a method of forming a porous graphene-based macroscopic structure, and to a device comprising such a structure.

### BACKGROUND

Graphene is a two-dimensional (2D) sheet structure of carbon atoms with unique electronic, chemical and mechanical properties. Graphene or graphene-based sheets are used in various applications such as solar cells or microelectrodes. In many applications it is the 2D form of the graphene-based sheets that has been employed.

Nevertheless, three-dimensional (3D) graphene-based structures have been recommended in view of their high surface rate and their physical and electronic characteristics, and a number of techniques have been developed for producing 3D graphene-based macroscopic structures, for example graphene foams. The problem is that such known tentative graphene foams tend to shrink and even collapse before long. Specifically, during the formation of graphene-based macroscopic structures the large accessible surface area of 2D graphene sheets is lost. The reason is that the individual graphene sheets tend to irreversibly aggregate and restack due to the strong π-π stacking and van der Waals force between the planar basal planes of graphene sheets.

This is regrettable because free-standing graphene macroscopic structures have shown unique catalytic, electrochemical, and mechanical properties together with potential applications in chemical filters and electrodes for energy storage devices.

Therefore, preventing aggregation of graphene sheets in macroscopic structures, in such a way that the properties of the individual graphene sheets are not compromised, is a critical challenge in constructing functional graphene-based macroscopic structures.

Reduction of Graphene Oxide (GO) is an interesting way of producing graphene-based materials. GO can be made from graphite oxide, which has a layered structure similar to that of graphite but in which the plane of carbon atoms is populated with oxygen-containing functional groups. Oxygen-containing functional groups (or simply oxygen functional groups) are moieties that contain C-O bonds (a functional group is a moiety that participates in similar chemical reactions in the molecules that contain it).

A form of GO is a plurality of sheets exfoliated from the oxidation of graphite, the sheets of GO containing one or a few layers of carbon atoms like graphene but also comprising a population or quantity of oxygen functional groups. GO can be reduced (at least partly) by removing some of the oxygen functional groups (it is difficult to remove all or even most of them). The reduced GO is also called functionalized graphene.

US 2013/0314844 A1 discloses a method of preparing a reduced graphene oxide foam, the method comprising the steps of: preparing a colloidal suspension of graphene oxide; forming a graphene oxide compact layered film from the colloidal suspension of graphene oxide using flow-directed assembly; and chemically reducing the graphene oxide compact layered film using a chemical reducing agent (e.g. hydrazine monohydrate) to form a porous and continuous cross-linked structure that is the reduced graphene oxide foam. The chemical reduction comprises autoclaving the graphene oxide compact layered film in the presence of the reducing agent, so that gas that is released during the reduction process forms pores in the layered film to form a porous graphene oxide network. The autoclaving is at a temperature of about 90°C for about 10 hours. However, this time span is too long for practical purposes.

### SUMMARY

It is an object of the present disclosure to provide a method to efficiently produce a porous graphene-based 3D structure.

In a first aspect, a method of forming a porous graphene-based macroscopic structure is provided. The method includes the intermediate formation of a suspension of clustered Graphene Oxide (GO) in water, which comprises the steps of: preparing a mixture of a solution of oxidized Graphene Oxide (oGO) in water (i.e. an aqueous solution of oGO) and a reducing agent; autoclaving said mixture at 75-200°C for 5-500 minutes, resulting in a solid material that comprises reduced Graphene Oxide (rGO); precipitating said solid material in an agglomerated form and transferring it to an aqueous solution; exposing the agglomerated material in the aqueous solution to sonication at a frequency of 10-50 kHz for 10-30 minutes, resulting in the suspension of clustered GO in water.

The initial oGO comprises a quantity of oxygen functional groups, and the resulting rGO still comprises a portion of the initial oxygen functional groups. Depending on the scope of the chemical reduction (undergone in the autoclave), the size of this portion will be bigger or smaller, and this will influence the properties of the rGO.

As stated above, a main problem of the known 3D-graphene processes is the aggregation of the graphene sheets that form the macroscopic structure due to attractive forces. Interestingly, the inventors have found that shortening the autoclave time allows controlling the level of reduction of the oGO in the autoclaved mixture, and hence the quantity of oxygen functional groups in the resulting agglomerated material of rGO. This is an important finding because the oxygen functional groups comprise ions of the same polarity and these charges repel each other, so that, by keeping a sizable portion of the initial oxygen functional groups in the resulting rGO, these repulsive forces counteract the attractive forces that tend to aggregate the graphene-based 3D structure and thus contribute to the stability of said structure.

In an example, the weight-proportion of oxygen functional groups in the rGO resulting from the autoclaving may be less than 30%.

In an example, the autoclaving is performed at a temperature and for a time such that the Carbon to Oxygen atomic ratio (C/O ratio) of the resulting rGO is between 6.50 and 7.00, preferably between 6.61 and 6.95. To clarify this, the C/O ratio of highly oxidized graphene oxide is about 2.

The C/O ratio can be obtained by X-ray photoelectron spectrometry (XPS) analysis. XPS is a surface analysis technique that can provide information about the chemical structures of GO (whether oxidized or reduced). The C1s XPS spectrum of GO can indicate the degree of oxidation (and thus of reduction) of the GO (C1 refers to compounds having a single carbon atom). The C1s spectrum of rGO exhibits the same oxygen functional groups than the C1s spectrum of oGO but with weaker peak intensities.

In an example, the reducing agent may comprise ascorbic acid.

In an example, the method may comprise the step of filtering the aqueous suspension of clustered GO through a pervious membrane in order to have some clustered GO deposited on a first side of the membrane. The deposited GO may be transferred to a substrate by pressing said substrate against the first side of the membrane; this can be thought of as printing the suspension of clustered GO onto the substrate. In this way, when the clustered GO has dried out, the result is the intended porous graphene-based macroscopic structure.

In an example, the porous graphene-based macroscopic structure may comprise an electrode or an electrode array.

In a second aspect, the method includes the intermediate formation of a suspension of clustered GO in water, which comprises the steps of: preparing a mixture of a solution of oGO in water and a reducing agent; autoclaving said mixture at a temperature and for a time such that the C/O ratio of the resulting rGO is between 6.50 and 7.00, preferably between 6.61 and 6.95; precipitating said solid material in an agglomerated form and transferring it to an aqueous solution; exposing said aqueous solution to sonication, preferably at a frequency of 10-50 kHz for 10-30 minutes, resulting in the suspension of clustered GO in water.

In a third aspect, a device comprising a porous graphene-based macroscopic structure made with a method according to the present disclosure is produced.

Further advantages, properties, aspects and features of the present disclosure may be derived from the below-described examples. The above-described features and/or the features disclosed in the claims and/or in the following description of examples can, if required, also be combined with one another even if this is not expressly described in detail.

### BRIEF DESCRIPTION OF THE DRAWINGS

Non-limiting examples of the present disclosure will be described in the following, with reference to the appended drawings, in which:
figure 1 a schematically shows a method to print a graphene-based macroscopic structure onto a plastic substrate; and
figure 2 shows an electrode array printed with such a method.

### DETAILED DESCRIPTION OF EXAMPLES

Graphene based materials assume varied forms that can go from 0D, 1D, planar 2D or 3D structures. These materials can be processed by bottom-up techniques such as chemical vapour deposition, or top-down approaches such as liquid/chemical exfoliation, whereby their structure and properties can vary in consonance with the procedure. 3D graphene structures, such as graphene based foams, have arisen in recent years due to their remarkable electrical and mechanical properties, which have been associated to the enhanced surface area associated to their 3D structure. Graphene Oxide (GO) is a material that can be processed by top-down approaches and can be obtained by a high yield production process (which is a step forward to commercialization), although it tends to present a somewhat defective structure. Nevertheless, the structure of GO has been proven to enhance the electrochemical properties of graphene for (bio)sensor applications. GO-based foams (or, in general, GO-based macroscopic structures) present a highly enhanced surface area, are highly conductive and offer extreme mechanical properties in terms of flexibility and stiffness.

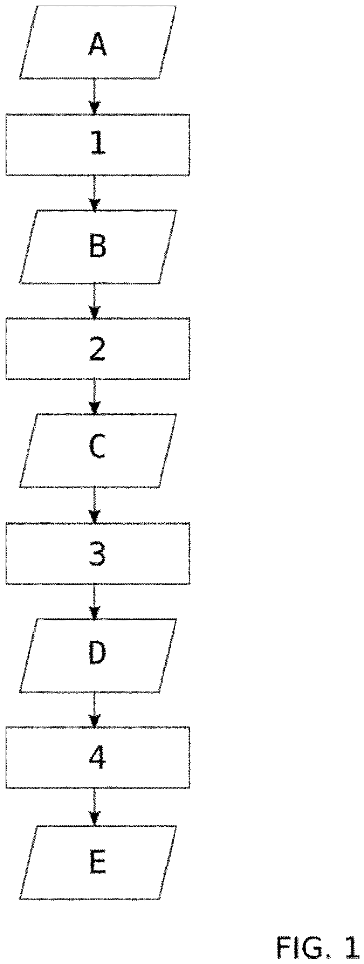

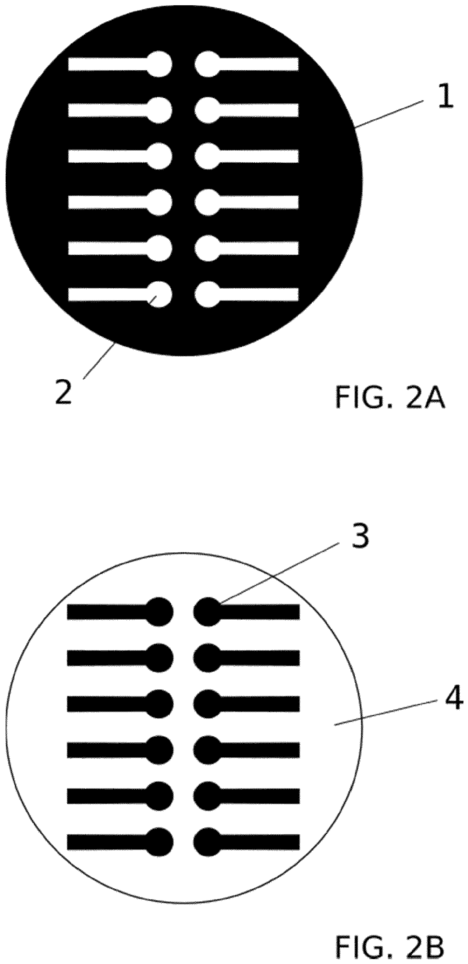

According to a novel methodology presented herein, an autoclave procedure is used to produce reduced graphene oxide (rGO) foams from oxidized graphene oxide (oGO) by applying a low operation time, of about 45 minutes instead of the long operation treatments reported so far, which may last up to 10 hours. The tested experimental procedure for preparing the rGO foam, and further transferring it onto a plastic substrate, is schematized in Figure 1, in which the rectangles represent process steps and the tilted parallelograms represent inputs/outputs thereof. Explained in words (fig. 1):
*A* = *Aqueous suspension of oGO and a reducing agent.*
   Step 1: Autoclaving the oGO aqueous suspension A.
*B* = *Solid lumps of agglomerated rGO foam (comprising some oxygen functional groups).*
   Step 2: Sonicating the rGO lumps B in water.
*C* = *Aqueous suspension of clustered particles of rGO.*
   Step 3: Filtering the rGO aqueous suspension C through a pervious membrane.
*D* = *deposit of rGO particles on the pervious membrane.*
   Step 4: Transferring by pressure the deposited rGO particles D onto a plastic substrate to form a printed foam-like rGO electrode array E.
*E* = *printed foam-like rGO electrode array patterned on the plastic substrate (see also* *fig. 2B**).*

In an experiment, 100 ml of a 1 mg/ml oGO aqueous solution were mixed with 100 ml of a 1 mg/ml aqueous solution of ascorbic acid, and then the new solution was autoclaved to produce a black material made mainly of rGO but with some (or even quite a lot of) oxygen functional groups too (because the autoclaving time was too short to greatly reduce the oGO). Autoclaving temperature and time were optimized through the evaluation of the C/O ratio of the obtained material by C1s XPS. The data shown at the table below evidences that the C/O ratio increases with both temperature and time, reaching a plateau at approximately a value of 6.78 by applying 125 °C during 45 min, which were the conditions used for the tested rGO reduction. The black material resulting from this treatment is precipitated in an agglomerated form and is transferred to a water solution. The morphology of the resulting material is found to be porous and 3D in nature, i.e. foam-like.

| **Time (min)** | **C/O ratio** |
|---|---|
| 1 | 3.69 ± 0.36 |
| 3 | 3.83 ± 0.22 |
| 5 | 3.95 ± 0.44 |
| 10 | 4.59 ± 0.42 |
| 15 | 5.52 ± 0.32 |
| 25 | 6.32 ± 0.11 |
| 35 | 6.56 ± 0.21 |
| 45 | 6.78 ± 0.17 |
| 60 | 6.82 ± 0.12 |
| | |

| **Temperature (°C)** | **C/O ratio** |
|---|---|
| 75 | 2.73 ± 0.29 |
| 100 | 3.20 ± 0.31 |
| 125 | 6.78 ± 0.17 |
| 150 | 6.80 ± 0.13 |

This table shows C/O ratios calculated from C1s XPS measurements for rGO-based foams obtained after autoclaving at different times for a fixed temperature of 125°C and at different temperatures for a fixed time of 45 minutes.

In general, the C/O ratio is approximately proportional to the conductivity of the rGO because the more oxygen functional groups in a GO the less electrically conductive the GO is. Therefore, rGO is more conductive than oGO and a highly reduced GO is more conductive than a mildly reduced GO. However, the inventors have found that after being autoclaved for, say, 20 minutes, the rGO is conductive enough to be applied to an electronic device. At any rate, after 60 minutes of autoclaving the conductivity of the rGO reaches a plateau and hardly increases anymore.

The inventors have further found that a C/O ratio of about 6.8 indicates a good compromise between the stability of the rGO aqueous suspension and the conductivity of the rGO.

The material resulting from the autoclave step is made of a network of rGO sheets that, upon drying at room temperature, form a crumpled rGO structure (with some oxygen functional groups therein to contribute to the 3D stability). As mentioned above, this material is transferred to a 50 ml plastic flask filled with 40 ml of water and is exposed to sonication during 15 min at 20 Hz. The resulting aqueous suspension is left at room temperature for 1 day in order to precipitate the unsuspended rGO particles, thus leaving an homogeneous aqueous suspension of clustered rGO that is ready for printing (for instance onto a plastics film) and is stable over a month.

The sonication involves the separation of the crumpled graphene sheets and the generation of small rGO clusters of approximately 200 nm that are suspended in water. The sonication time can be varied, within certain limits, to influence the size of these clusters, which in turn can be used to exert some control over the pore size of the printed film. Furthermore, these small clusters or microparticles are stable in water thanks to the mid-level of oxidation in the foam, which retains enough same-polarity charges therein to ensure a stable suspension. A dry-up step can be avoided at this stage as the bulk foam in kept in said water suspension.

The printing of such aqueous foam-based graphene inks can be performed by employing wax printed membranes (WPM) in which the wax areas define a pattern complementary to the desired graphene pattern. European Patent No. 3158397, by the same inventors, is related to such printing, and it is hereby incorporated by reference.

The membrane can be a hydrophilic (or pervious) nitrocellulose membrane and the wax areas actually constitute a hydrophobic mask. This printing methodology comprises filtering the graphene suspension (ink) through the unclogged areas not covered by the wax on the WPM. These areas enable the water to be filtered leaving a rGO layer on top of the membrane. These WPMs coated with rGO particles are placed over the target substrate (made of e.g. paper or plastics) and the back side of the WPM is fast dried (e.g. for 10 seconds) using compressed air. Then pressure is applied using, for example, roll-to-roll technology to produce the desired patterned structures on top of the substrate, resulting for instance in an electrode array.

Fig. 2A shows the pervious membrane covered with an inverse pattern of wax 1 (i.e. a WPM) that leaves some gaps 2 shaped as the desired direct pattern, and Fig. 2B shows an electrode array 4 shaped according to such desired pattern and printed on a plastic substrate 3 that can be transparent.

With this printing of the foam-like graphene ink, an open porous network with high active surface area can be obtained. This can be enhanced by applying vacuum filtration to stable microclusters of rGO particles in an aqueous suspension. Vacuum filtration consists in filtering a rGO suspension through, for example, 25 nm pores of a nitrocellulose membrane under a vacuum. This process is faster for rGO than for GO because in the former case the sheets are less clogged and there are open venues for the water to be filtered, which shortens the filtration time.

The obtained material was also electrochemically characterized. Electrodes prepared with the above-described methodology were evaluated by cyclic voltammetry in 2 mM K₃Fe(CN)₆/0.2 M KNO₃ using a three-electrode system, with a Ag/AgCl reference electrode and a platinum wire counter electrode. Different scan rates in the range 2-100 mV/s were evaluated and the voltammetric peaks corresponding to the reversible system of Fe²⁺/Fe³⁺ oxidation/reduction were observed. The recorded anodic and cathodic intensity peaks, together with the small separation between peaks, suggest that the obtained electrodes are excellent for monitoring electrochemical processes.

Moreover, a clear linearity was observed by plotting the current intensity of both anodic and cathodic peaks vs 2.687e-5 multiplied by the square root of the scan rate (in V/s), the cubic root of the number of electrons transferred, the square root of the diffusion coefficient (in cm²/s) and the redox compound concentration (in mol/cm³). This data allows to estimate an electrochemically active area of around 0.047 cm² using the well-known Randles-Sevcik equation. This effective are is considerably higher than the calculated for standard screen-printed carbon electrodes (SPCEs) of the same geometric size (around 0.016 cm²), probably due to the high porosity and 3D structure of the graphene foam electrodes.

The advantages of such electrodes were also evaluated by measuring the hydrogen evolution reaction (HER) catalyzed by gold nanoparticles (AuNPs) using SPCE standard electrodes (Screen Printed Carbon Electrodes). Chronoamperograms recorded at -1V in 1M HCl showed increased catalytic currents for different AuNPs concentrations in the range 59-3000 pM. A logarithm relationship between the current intensity and the AuNP concentration was found in such range, allowing to estimate a detection limit of around 0.5 pM, which is lower than the obtained with SPCEs (around 1 pM). The sensitivity of the detection system was also substantially better than the corresponding to SPCEs. These results are in agreement with the high surface area observed for the foam electrodes. The high porosity of these electrodes can also increase the hydrogen release during the hydrogen evolution reaction by favoring the kinetics of such a reaction.

In sum, the ease of the graphene-foam ink preparation, the resulting suspended microparticles or rGO clusters and the stability thereof in water constitute a leap forward in ink formulation from rGO sheets. The ability to print this ink by using wax-printed membranes entails the ability to produce rGO foam-like thin films with controlled shape and thickness. The small pore size and the connected rGO layers enable to maintain their electrical properties and to increase the surface area and the edge-like exposure thereof. The derived electrochemical properties where examined and an ability to detect half the quantity of nanoparticles than a SPCE does for similar surface areas was revealed, i.e., the presently disclosed electrodes are twice as discriminating as the SPCE ones.

The structure presented herein can have a high impact on the electronic performance of future electronic devices in the fields of energy (i.e. supercapacitors), biosensors and communication systems such as antennas.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. Method of forming a porous graphene-based macroscopic structure, **characterized by** including the intermediate formation of a suspension of clustered Graphene Oxide (GO) in water, which comprises the steps of:
- preparing a mixture of a solution of oxidized Graphene Oxide (oGO) in water and a reducing agent;
- autoclaving said mixture at 75-200°C for 5-500 minutes, resulting in a solid material that comprises reduced Graphene Oxide (rGO);
- precipitating said material in an agglomerated form and transferring it to an aqueous solution;
- exposing the agglomerated material in the aqueous solution to sonication at a frequency of 10-50 kHz for 10-30 minutes, resulting in the suspension of clustered GO in water.

2. Method according to claim 1, further comprising the steps of:
- letting the aqueous suspension of clustered GO at room temperature for 15-30 hours in order to precipitate the unsuspended particles;
- removing said precipitation and leaving a homogeneous suspension of clustered GO in water.

3. Method according to claim 1 or 2, wherein the autoclaving is performed at 120-150°C for 30-60 minutes.

4. Method according to any of claims 1 to 3, wherein the autoclaving is performed at a temperature and for a time such that the Carbon to Oxygen atomic ratio of the resulting solid material is between 6.50 and 7.00.

5. Method according to claim 4, wherein the autoclaving is performed at a temperature and for a time such that the Carbon to Oxygen atomic ratio of the resulting solid material is between 6.61 and 6.95.

6. Method according to any of the preceding claims, wherein the sonication frequency is 15-25 kHz and the sonication time is 12-18 minutes.

7. Method according to any of the preceding claims, comprising the step of filtering the aqueous suspension of clustered GO through a pervious membrane in order to have some clustered GO deposited on a first side of the membrane.

8. Method according to claim 7, wherein, before the filtration step, a hydrophobic mask is printed on the first side of the membrane, so that the deposited clustered GO is patterned on the first side of the membrane as it only covers the areas thereof not occluded by the hydrophobic mask.

9. Method according to claim 7 or 8, comprising the step of pressing a substrate against the first side of the membrane in order to transfer the clustered GO deposited thereon to the substrate.

10. Method according to claim 9, wherein the substrate is flexible.

11. Method according to claim 10, wherein the substrate is a flexible film.

12. Method according to any of claims 9 to 11, comprising the step of drying out the liquid phase of the transferred GO, resulting in a porous graphene-based macroscopic structure.

13. Method according to any of claims 1 to 6, comprising the step of drying out the liquid phase of the suspension of clustered GO, resulting in a porous graphene-based macroscopic structure.

14. Method according to claim 12 or 13, wherein the porous graphene-based macroscopic structure comprises an electrode.

15. Device comprising a porous graphene-based macroscopic structure made with a method according to any of claims 1 to 14.
